# EUROPÄISCHE PATENTSCHRIFT

(11) **EP 3 926 185 B1**
(45) Veröffentlichungstag und Bekanntmachung des Hinweises auf die Patenterteilung: **07.06.2023**
(21) Anmeldenummer: 20181074.4
(22) Anmeldetag: 19.06.2020
(51) Int. Cl.: F16B 39/06, F16B 37/08

(54) **WANDHALTERUNG**
WALL SUPPORT
SUPPORT MURAL

(43) Veröffentlichungstag der Anmeldung: 22.12.2021
(73) Patentinhaber: Geberit International AG, 8645 Jona (CH)
(72) Erfinder: BÄNZIGER, David, 8636 Wald (CH)
(74) Vertreter: Frischknecht, Harry Ralph

(56) Entgegenhaltungen:
- EP-A1- 3 404 151
- US-A- 4 125 049

## Beschreibung

### TECHNISCHES GEBIET

Die vorliegende Erfindung betrifft eine Wandhalterung nach dem Oberbegriff von Anspruch 1.

### STAND DER TECHNIK

Aus der EP 0 786 562 ist eine Wandhalterung bekannt geworden. Die Wandhalterung weist ein mit der Wand in Verbindung bringbares Befestigungsteil auf, in welches eine Schraube einzuschrauben ist. Nachteilig an den Wandhalterungen nach dem Stand der Technik ist, dass die Wandhalterungen sich über die Dauer lösen können. In der Praxis ist man dazu übergegangen, eine Kontermutter einzusetzen, was den Lieferumfang aber verkompliziert.

Die EP 3 428 353 schlägt ein Konterelement mit einem Gewindeabschnitt vor. Das Konterelement ist von einer Ausgangslage in eine Konterlage verschwenkbar. In der Konterlage wird die Gewindestange über den Gewindeabschnitt festgesetzt. Das Konterelement wirkt dabei als Kontermutter oder Gegenmutter. Obwohl bezüglich der Drehsicherung der Gewindestange sehr gute Resultate erzielt wurden, hat sich in der Praxis gezeigt, dass die Konterung durch die Kontermutter oft vergessen geht.

Aus der US 4 125 049 A ist eine Mutteranordnung für eine Gewindestange bekannt.

### DARSTELLUNG DER ERFINDUNG

Ausgehend von diesem Stand der Technik liegt der Erfindung eine Aufgabe zugrunde, eine Wandhalterung anzugeben, welche die Nachteile des Standes der Technik überwindet. Insbesondere soll eine Wandhalterung angegeben werden, welche einfacher handhabbar ist.

Diese Aufgabe löst der Gegenstand von Anspruch 1. Demgemäss umfasst eine Wandhalterung ein Ankerelement mit einem Befestigungsabschnitt zur Befestigung des Ankerelements an einem Gebäude und mit einem sich dem Befestigungsabschnitt anschliessenden sowie sich entlang einer Mittelachse erstreckenden Aufnahmeabschnitt mit einer sich entlang der Mittelachse erstreckenden Aufnahmeöffnung, eine in der Aufnahmeöffnung bewegbar gelagerte Gewindestange mit einem Aussengewinde, ein Mutterelement mit einem Innengewinde, das umfangsseitig durch einen gewindefreien Durchgang unterbrochen ist, und ein Sicherungselement zur Sicherung des Mutterelements. Der Aufnahmeabschnitt weist ein Aussengewinde auf, auf welchem das Mutterelement mit dem Innengewinde verschwenkbar gelagert ist.

Das Mutterelement ist von einer Grobeinstelllage über eine Feineinstelllage in eine Klemmlage bewegbar.

In der Grobeinstelllage ist das Mutterelement derart positioniert, dass das Aussengewinde der Gewindestange im Durchgang liegt, so dass die Gewindestange in der Aufnahmeöffnung in Richtung der Mittelachse verschiebbar ist.

In der Feineinstelllage ist das Mutterelement derart positioniert, dass das Aussengewinde der Gewindestange im Eingriff mit dem Innengewinde des Mutterelements ist, derart, dass durch Drehen der Gewindestange die Gewindestange einen Vorschub in Richtung der Mittelachse erfährt.

Von der Feineinstelllage wird das Mutterelement durch bzw. über das Sicherungselement mit dem Innengewinde radial zur Gewindestange in die Klemmlage bewegt, derart dass ein Drehen der Gewindestange verunmöglicht wird.

Das Sicherungselement drückt demnach das Mutterelement radial an die Gewindestange, wodurch diese zum Aufnahmeabschnitt geklemmt wird. Hierdurch wird eine Klemmung der Gewindestange erreicht, so dass die Gewindestange nicht durch normale Kraftanwendung verdreht werden kann.

Durch das Mutterelement, welches die drei Lagen einnehmen kann, ergeht der Vorteil, dass dem Installateur eine Wandhalterung an die Hand gegeben wird, welche in klaren Schritten montiert werden kann. Die Wandhalterung ist demnach entsprechend benutzerfreundlich ausgebildet.

In der Grobeinstelllage wird eine grobe Einstellung der Gewindestange erlaubt, wobei die Gewindestange mit einer Längsbewegung in Richtung der Mittelachse verschoben werden kann. Der Installateur kann die Gewindestange dann beispielsweise auf den Zentimeter genau vormontieren. In der Feineinstelllage kann der Installateur die Gewindestange dann Millimetergenau positionieren. Anschliessend verschiebt das Sicherungselement das Mutterelement radial zur Gewindestange hin, wodurch die Gewindestange festgelegt bzw. festgeklemmt wird.

Dadurch, dass das Mutterelement die drei Lagen einnehmen kann, ergeht der Vorteil, dass keine separaten Konterelemente vorzusehen sind.

Vorzugsweise wird die Gewindestange gegen die Innenseite der Aufnahmeöffnung gedrückt, derart, dass die Gewindestange zwischen der Innenseite der Aufnahmeöffnung und dem Innengewinde des Mutterelements geklemmt wird. Hierdurch wird im Wesentlichen das für eine Drehung der Gewindestange benötigte Spiel zwischen der Gewindestange und dem Mutterelement aufgehoben.

Vorzugsweise wird das Mutterelement von der Feineinstelllage in die Klemmlage entlang einer Querbewegung quer zur Mittelachse bewegt, wobei durch diese Querbewegung die Gewindestange zwischen dem Innengewinde und Aufnahmeöffnung verklemmt wird.

Vorzugsweise erstreckt sich das Aussengewinde des Aufnahmeabschnitts um einen Winkel von höchstens 300° um die Mittelachse herum.

Vorzugsweise erstreckt sich das Innengewinde des Mutterelements um einen Winkel von höchstens 300° um die Mittelachse herum und der Durchgang erstreckt sich um einen Winkel von mindestens 60° um die Mittelachse herum. Die Winkel können je nach Dimensionierung variieren. Der Durchgang ist jeweils so bemessen, dass in der Grobeinstelllage ein freies Verschieben der Gewindestange ermöglicht wird. Das heisst, dass dann kein Eingriff zwischen dem Innengewinde des Mutterelements und dem Aussengewinde der Gewindestange vorliegt und die Gewindestange ungehindert verschiebbar ist.

Vorzugsweise erstreckt sich der Durchgang vom Innengewinde des Mutterelementes her radial in das Mutterelement hinein.

Vorzugsweise ist das Sicherungselement auf der Aussenseite des Aufnahmeabschnitts in einer Längsführung längsbeweglich und bezüglich der Mittelachse drehfest gelagert und von einer Ausgangslage in eine Sicherungslage bewegbar. In der Sicherungslage ist das Sicherungselement derart in das Mutterelement eingreift, dass dieses radial gegen das Aussengewinde der Gewindestange gedrückt wird und bezüglich einer Drehbewegung um die Mittelachse gesichert ist.

Die Längsführung ist in Richtung der Mittelachse orientiert und derart ausgebildet, dass eine Bewegung in Richtung der Längsführung möglich ist und dass eine Bewegung quer zur Längsführung bzw. um die Mittelachse herum verunmöglicht wird.

Vorzugsweise durchdringt die Längsführung das Aussengewinde des Aufnahmeabschnitts, derart, dass das Aussengewinde durch die die Längsführung unterbrochen ist.

Vorzugsweise ist die Längsführung als Nut ausgebildet, welche sich aussenseitig am Befestigungsabschnitt in Richtung der Mittelachse erstreckt.

Vorzugsweise weist das Mutterelement eine Ausnehmung auf, in welche das Sicherungselement einragt, wenn das Mutterelement in der Grobeinstelllage ist, wobei für die Bewegung in die Feineinstelllage das Mutterelement aus der Ausnehmung zu bewegen ist.

Vorzugsweise weist das Sicherungselement einen Eingriffsabschnitt auf, welcher in der Sicherungslage in den Durchgang des Mutterelementes eingreift.

Vorzugsweise nimmt die Dicke des Eingriffsabschnitts quer zur Mittelachse gesehen von seinem freien Ende her gesehen zu, derart, dass mit zunehmender Bewegung in die Sicherungslage, das Mutterelement mit grösserer Kraft gegen die Gewindestange gedrückt wird.

Vorzugsweise wird der Eingriffsabschnitt durch zwei Federschenkel gebildet. Die Federschenkel sind am freien Ende des Eingriffsabschnitts zusammengeführt. Die Federschenkel beaufschlagen das Mutterelement mit einer Federkraft. In einer anderen Ausführungsform kann der Eingriffsabschnitt als starres Element ausgebildet sein.

Vorzugsweise ist das Sicherungselement in der Sicherungslage mit einer Rastverbindung zwischen Sicherungselement und Aufnahmeabschnitt an einer Bewegung aus der Sicherungslage in die Ausgangslage gesichert.

Vorzugsweise sind für die Rastverbindung am Aufnahmeabschnitt und am Sicherungselement Rastelemente angeordnet, welche bei der Bewegung des Sicherungselements in die Sicherungslage miteinander in Eingriff bringbar sind.

Besonders bevorzugt sind die Rastelemente in der Längsführung integriert.

Vorzugsweise weist die Aufnahmeöffnung einen Innengewindeabschnitt auf, wobei wenn das Mutterelement in der Feineinstalllage ist, der Innengewindeabschnitt und das Innengewinde des Mutterelements gemeinsam ein Innengewinde für die Gewindestange bereitstellen.

Das Innengewinde des Mutterelements und der Innengewindeabschnitt sind bezüglich der Gewindeparameter Steigung und Gewindetiefe im Wesentlichen gleich ausgebildet.

Vorzugsweise weist das Sicherungselement einen Lagerabschnitt mit einer Lagerfläche auf, wobei das Sicherungselement an einer aussenseitig am Aufnahmeabschnitt liegenden Fläche mit der Lagerfläche anliegt.

Vorzugsweise ist am Sicherungselement ein Supportelement angeordnet, wobei das Supportelement mindestens eine Supportfläche aufweist.

An der Supportfläche können Einbauelemente, wie Gipsplatten, oder dergleichen abgestützt werden.

Vorzugsweise sind das Sicherungselement und das Supportelement zwei separate Elemente, welche miteinander verbindbar sind, wobei das Supportelement vorzugsweise zum Sicherungselement verschwenkbar ist. Hierdurch ergeht der Vorteil, dass das Supportelement mit der Supportfläche vor Ort ausgerichtet werden kann. Alternativerweise sind das Sicherungselement und das Supportelement einstückig ausgebildet sind.

Ein Verfahren zur Montage einer Wandhalterung gemäss obiger Beschreibung ist dadurch charakterisiert,
dass das Mutterelement in die Grobeinstelllage gebracht wird, derart, dass die Gewindestange in der Aufnahmeöffnung in Richtung der Mittelachse verschiebbar ist;
dass nach erfolgter Grobeinstellung das Mutterelement in die Feineinstelllage gebracht wird, derart, dass durch Drehen der Gewindestange die Gewindestange einen Vorschub in Richtung der Mittelachse erfährt; und
dass nach erfolgter Feineinstellung, das Mutterelement in die Klemmlage gebracht wird, derart, dass ein Drehen der Gewindestange verunmöglicht wird.

Vorzugsweise wird das Ankerelement vor den genannten Schritten mit einer Gebäudestruktur verbunden.

Vorzugsweise wird die Gewindestange nach den genannten Schritten mit einem Montagerahmen verbunden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung der Wandhalterung gemäss einer ersten bevorzugten Ausführungsform;
- Fig. 2a-d: eine perspektivische Ansicht, eine Schnittdarstellung durch die Mittelachse, eine Schnittdarstellung quer zur Mittelachse und eine perspektivische Schnittdarstellung der Wandhalterung gemäss der Figur 1 in einer Grobeinstelllage;
- Fig. 3a-d: eine perspektivische Ansicht, eine Schnittdarstellung durch die Mittelachse, eine Schnittdarstellung quer zur Mittelachse und eine perspektivische Schnittdarstellung der Wandhalterung gemäss der Figur 1 in einer Feineinstelllage;
- Fig. 4a-d: eine perspektivische Ansicht, eine Schnittdarstellung durch die Mittelachse, eine Schnittdarstellung quer zur Mittelachse und eine perspektivische Schnittdarstellung der Wandhalterung gemäss der Figur 1 in einer Klemmlage;
- Fig. 5: eine perspektivische Darstellung der Wandhalterung gemäss Figur 1 mit einem verschwenkten Supportelement;
- Fig. 6a, b: perspektivische Ansichten eines Mutterelements der Wandhalterung gemäss Figur 1;
- Fig. 7a,b: perspektivische Ansichten eines Ankerelements der Wandhalterung gemäss Figur 1;
- Fig. 8: eine perspektivische Explosionsdarstellung der Wandhalterung gemäss einer zweiten bevorzugten Ausführungsform;
- Fig. 9a,b: eine perspektivische Schnittdarstellung und eine Schnittdarstellung der Wandhalterung gemäss der Figur 8 in einer Grobeinstelllage;
- Fig. 10a,b: eine perspektivische Schnittdarstellung und eine Schnittdarstellung der Wandhalterung gemäss der Figur 8 in einer Feineinstelllage; und
- Fig. 11a,b: eine perspektivische Schnittdarstellung und eine Schnittdarstellung der Wandhalterung gemäss der Figur 8 in einer Klemmlage.

### BESCHREIBUNG BEVORZUGTER AUSFÜHRUNGSFORMEN

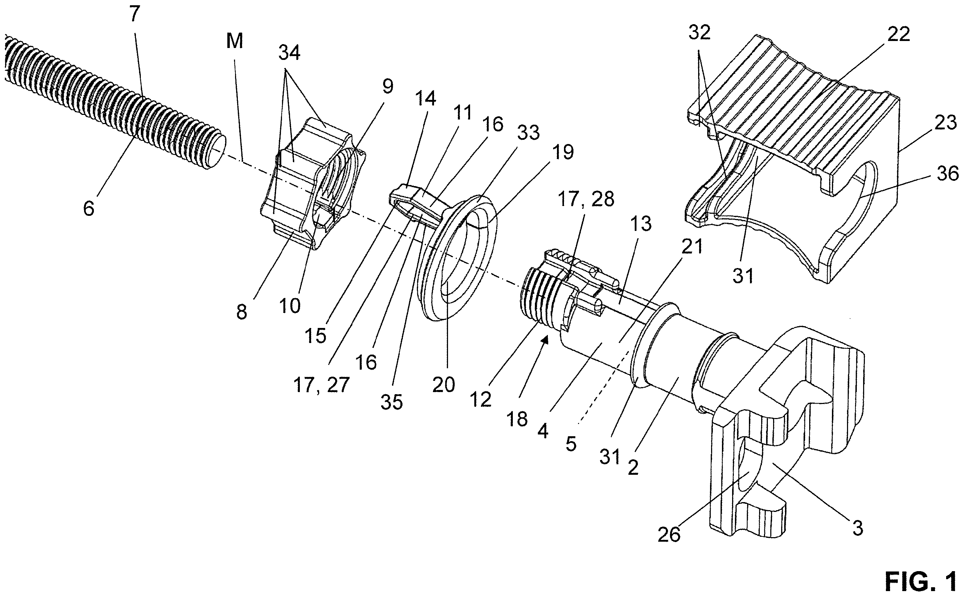

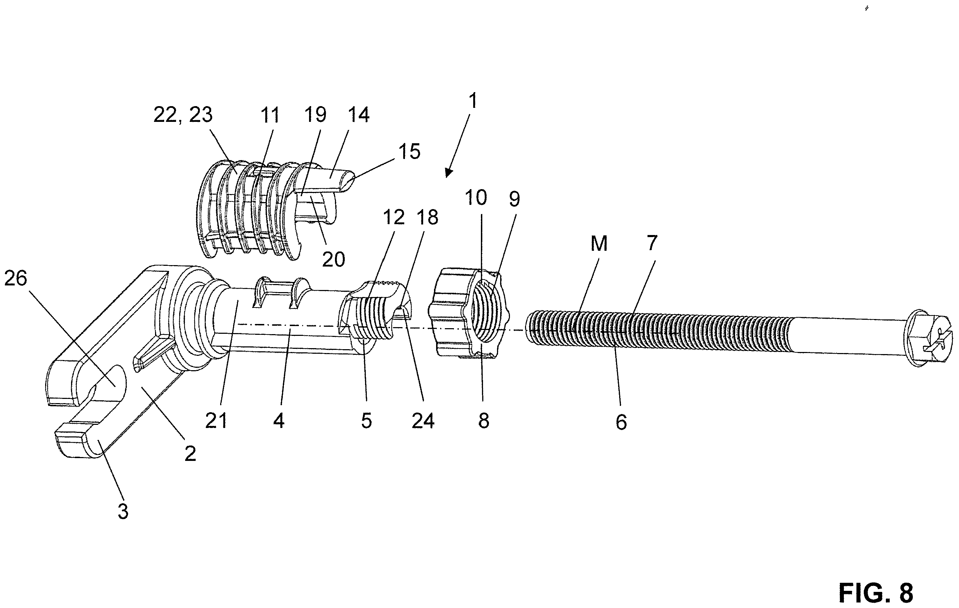

In den Figuren 1 bis 7 wird eine erste Ausführungsform einer Wandhalterung 1 gezeigt. In den Figuren 8 bis 11 wird eine zweite Ausführungsform der Wandhalterung 1 gezeigt. Gleiche Teile sind dabei mit gleichen Bezugszeichen versehen.

Die Wandhalterung 1 gemäss beiden Ausführungsformen umfasst ein Ankerelement 2, eine Gewindestange 6, ein Mutterelement 8 und ein Sicherungselement 11.

Das Ankerelement 2 weist einen Befestigungsabschnitt 3 zur Befestigung des Ankerelementes 2 an einem Gebäude und einen sich vom Befestigungsabschnitt 3 entlang einer Mittelachse M erstreckenden Aufnahmeabschnitt 4 mit einer sich entlang der Mittelachse M erstreckenden Aufnahmeöffnung 5 auf. Der Befestigungsabschnitt 3 ist in beiden Ausführungsformen plattenartig ausgebildet und weist eine seitlich zur Mittelachse M versetzt angeordnete Durchführöffnung 26 auf, durch welche ein Befestigungselement, wie beispielsweise eine Schraube, hindurchgeführt werden kann. Über diese Schraube kann das Ankerelement 2 dann mit einem Gebäude verbunden werden. Der Aufnahmeabschnitt 4 erstreckt sich vom Befestigungsabschnitt 3 weg und dient der Aufnahme bzw. Lagerung von der Gewindestange 6, dem Mutterelement 8 und dem Sicherungselement 11.

Die Gewindestange 6 ist in der Aufnahmeöffnung 5 bewegbar gelagert. Die Gewindestange 6 weist ein Aussengewinde 7 auf. Die Gewindestange 6 kann zum Beispiel mit einem Montagerahmen oder einem Sanitärartikel in Verbindung gebracht werden. Hierdurch kann der Montagerahmen oder der Sanitärartikel fest mit dem Gebäude verbunden werden.

Das Mutterelement 8 ist mit einem Innengewinde 9 ausgebildet, welches umfangsseitig durch einen gewindefreien Durchgang 10 unterbrochen ist. Aussenseitig weist das Mutterelement 8 eine Antriebsstruktur 34 auf, über welche das Mutterelement 8 betätigbar ist.

Der Aufnahmeabschnitt 4 weist an dessen Frontseite gegenüber des Befestigungsabschnittes 3 ein Aussengewinde 12 auf. An diesem Aussengewinde 12 ist das Mutterelement 8 mit dem Innengewinde 9 verschwenkbar gelagert. Das heisst, das Mutterelement 8 kann auf das Aussengewinde 12 des Aufnahmeabschnittes 4 aufgeschraubt werden. Das Mutterelement 8 ist dabei von einer Grobeinstelllage G über eine Feineinstelllage F in eine Klemmlage K bewegbar. In der Grobeinstelllage G kann die Gewindestange 6 entlang einer Längsbewegung relativ zur Aufnahmeöffnung 5 verschoben werden. In der Feineinstelllage F ist das Aussengewinde 7 der Gewindestange 6 im Eingriff mit dem Innengewinde 9 des Mutterelements 8 und durch Drehen der Gewindestange 6 kann deren Lage fein eingestellt werden. In der Klemmlage K klemmt das Mutterelement 8 die Gewindestange 6, so dass diese nicht weiter bewegbar ist.

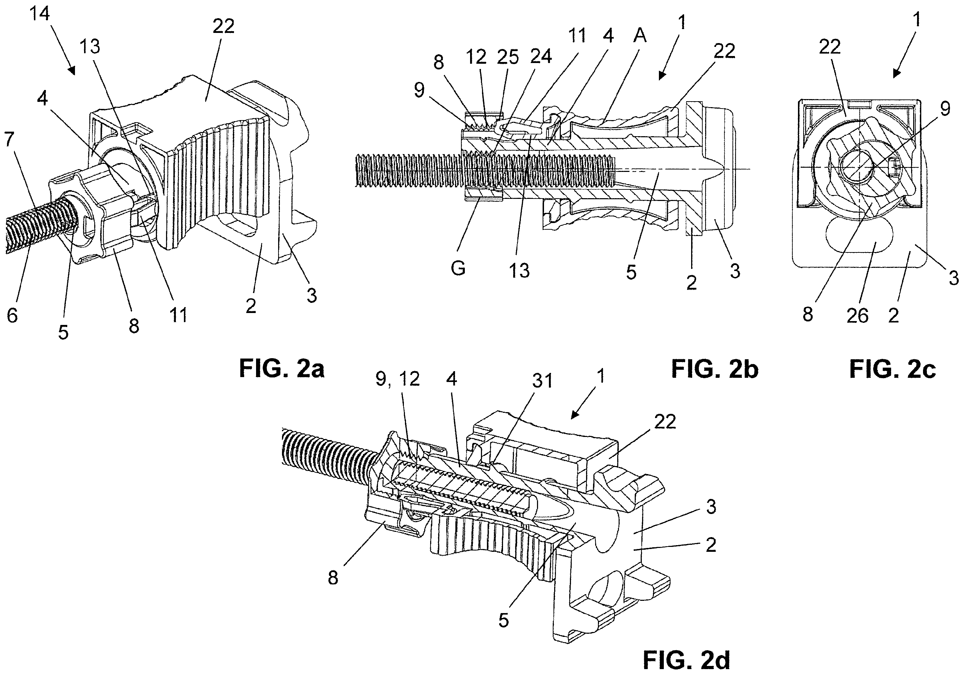

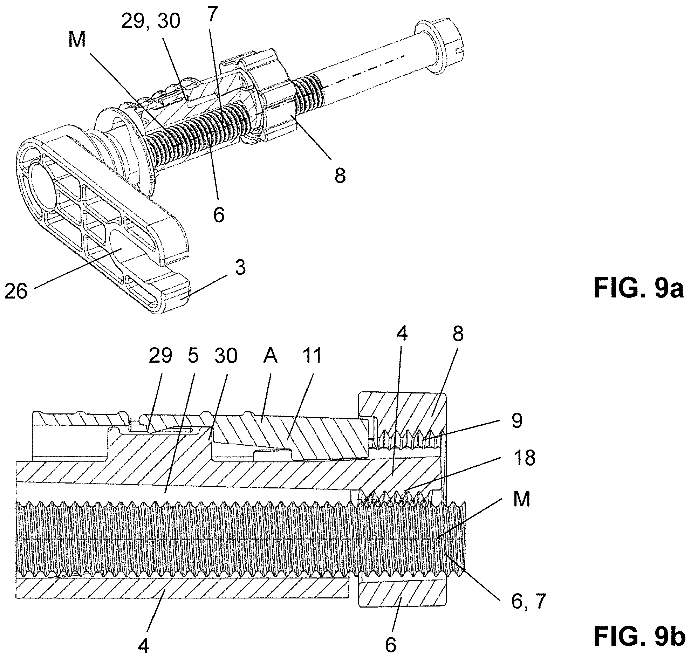

In den Figuren 2a bis 2d sowie in den Figuren 9a bis 9d befindet sich das Mutterelement 9 in der Grobeinstelllage G. In der Grobeinstelllage G ist das Mutterelement 9 derart positioniert, dass das Aussengewinde 7 der Gewindestange 6 im Durchgang 10 liegt. Das heisst, das Aussengewinde 7 der Gewindestange 6 ist nicht im Eingriff mit dem Innengewinde 9 des Mutterelementes 8. Hierdurch kann die Gewindestange 6 in der Aufnahmeöffnung 5 in Richtung der Mittelachse M frei verschoben werden. Das Aussengewinde 7 der Gewindestange 6 ist demnach nicht in einem Eingriff mit einem anderen Gewinde und kann demnach in Richtung der Mittelachse M frei verschoben werden. Durch dieses freie Verschieben ergeht der Vorteil, dass ein Installateur die Gewindestange 6 rasch positionieren kann. Es handelt sich also um eine grobe Einstellung der benötigten Position der Gewindestange 6.

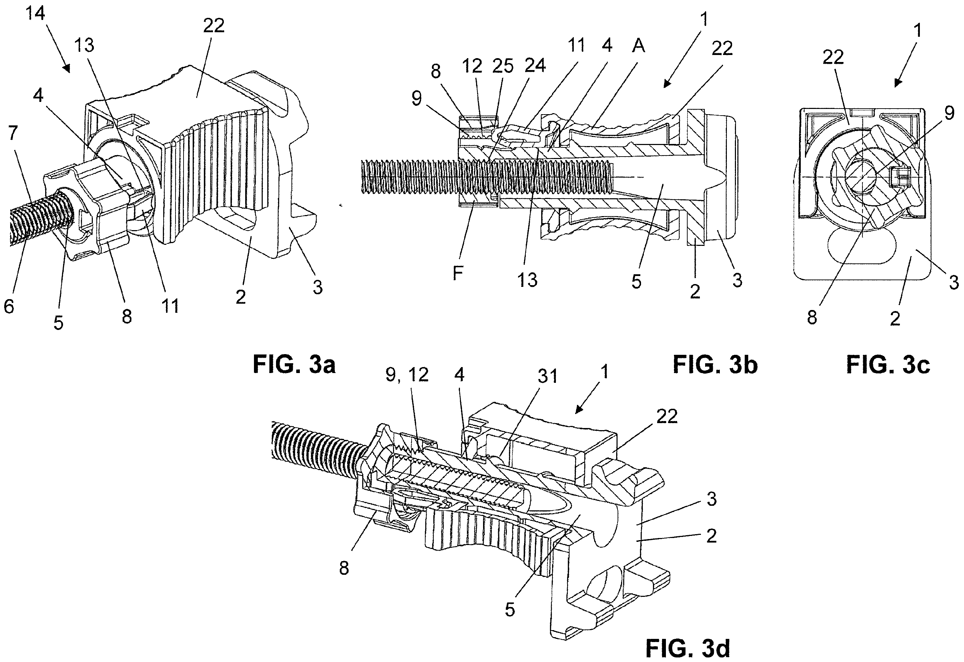

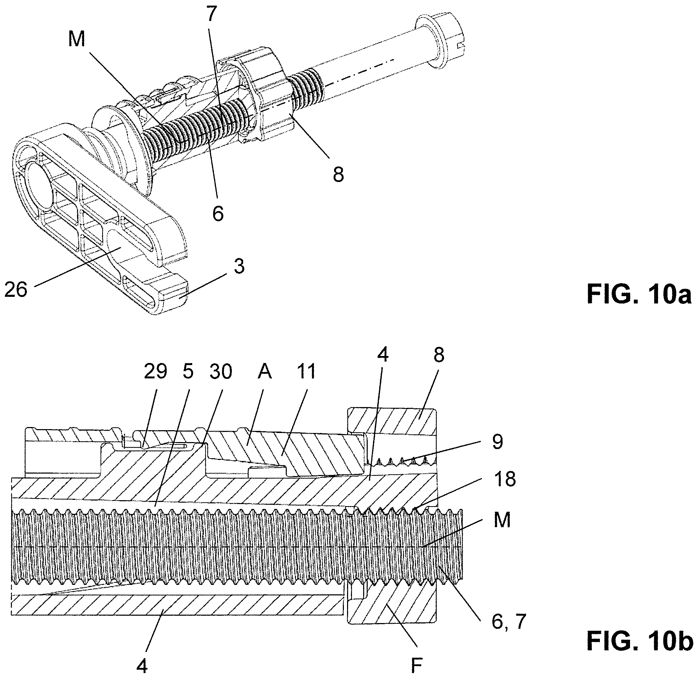

Nach erfolgter Grobeinstellung wird das Mutterelement 8 um die Mittelachse M verschwenkt, so dass dieses in einer Feineinstelllage F zu liegen kommt. In den Figuren 3a bis 3d sowie in den Figuren 10a bis 10b wird die Feineinstelllage F gezeigt. In der Feineinstelllage F ist das Mutterelement 8 derart positioniert, dass das Aussengewinde 7 der Gewindestange 6 im Eingriff mit dem Innengewinde 9 des Mutterelementes 8 ist. Die Gewindestange 6 ist aufgrund des Eingriffs zwischen dem Aussengewinde 7 der Gewindestange 6 und dem Innengewinde 9 des Mutterelementes 8 nicht mehr wie in der Grobeinstelllage G frei bewegbar, sondern es muss eine Drehung der Gewindestange 6 ausgeführt werden, welche aufgrund des Gewindeeingriffs dann in einer Längsbewegung resultiert. In beiden Ausführungsformen wird das Mutterelement 8 von der Grobeinstelllage G in die Feineinstelllage F im Wesentlichen um 180° verschwenkt. In der Feineinstelllage F kann der Installateur die genaue Position der Gewindestange 6 einstellen. Es handelt sich dabei um eine feine, insbesondere millimetergenaue, Einstellung. Die Feineinstellung ist für den Installateur von grossem Vorteil, weil die Gewindestange sehr genau bezüglich weiteren Elementen, wie beispielsweise mit einem Montagerahmen oder einem Sanitärartikel, ausrichtbar ist.

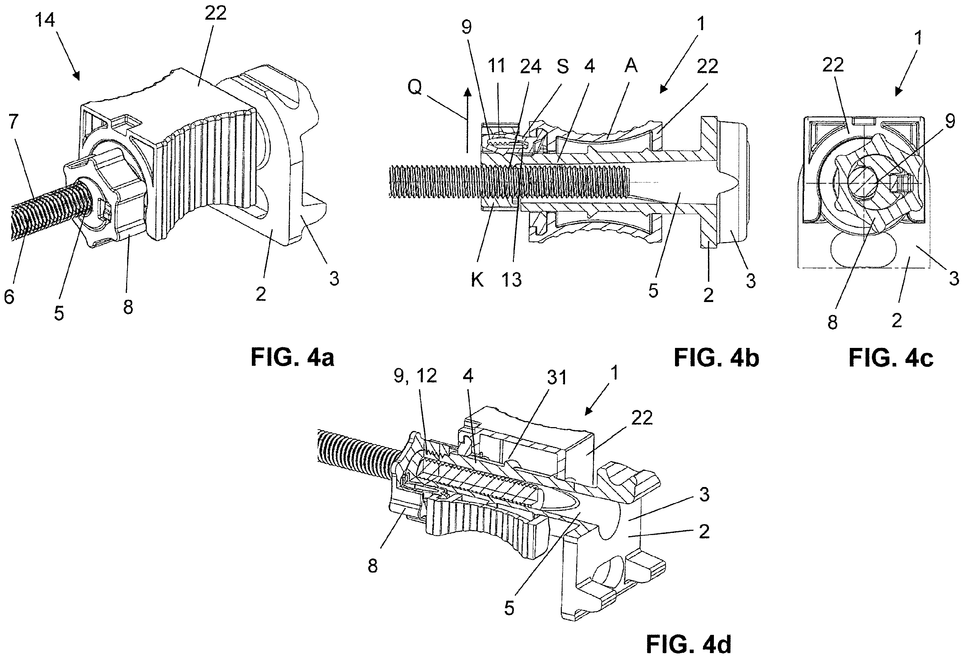

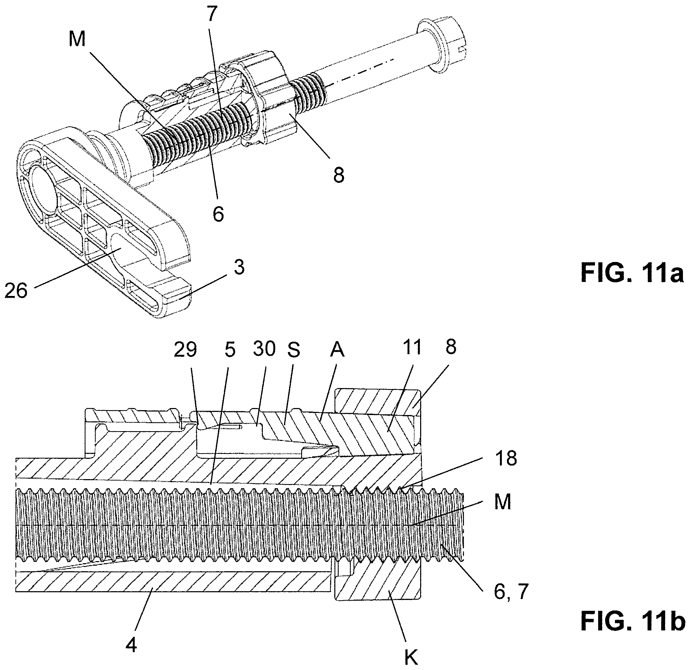

Weiter wird nach erfolgter Feineinstellung das Mutterelement 8 durch das Sicherungselement 11 von der Feineinstelllage F in die Klemmlage K bewegt. Das Sicherungselement 11 wird von einer Ausgangslage A, wie in den Figuren 3a bis 3d bzw. 10a bis 10b gezeigt, in Richtung der Mittelachse M in eine Sicherungslage S bewegt. Die Sicherungslage S wird in den Figuren 4a bis 4d und 11a bis 11b genauer gezeigt. Das Sicherungselement 11 bewegt durch die besagte Bewegung das Mutterelement 8 mit dem Innengewinde 8 radial zur Gewindestange 6 in ihre Klemmlage. In der Klemmlage wird das Innengewinde 9 des Mutterelementes 8 radial zum Aussengewinde 7 der Gewindestange 6 geklemmt. Hierdurch kommt es zu einem Einklemmen der Gewindestange 6 in der Aufnahmeöffnung 5 und aufgrund der radial wirkenden Klemmkraft des Mutterelementes 8 wird ein Drehen der Gewindestange 6 verunmöglicht. In der Klemmlage K wird also die Gewindestange 6 gegen die Innenseite 24 der Aufnahmeöffnung 5 gedrückt, derart, dass die Gewindestange 6 zwischen der Innenseite 24 und der Aufnahmeöffnung 5 und dem Innengewinde 9 des Mutterelementes 8 geklemmt wird.

In der gezeigten Ausführungsform weist die Innenseite 24 der Aufnahmeöffnung 5 weiterhin einen Innengewindeabschnitt 18 auf. Der Innengewindeabschnitt 18 erstreckt sich nur über einen Teilbereich von der Innenseite 24 der Aufnahmeöffnung 5, das heisst, der Innengewindeabschnitt 18 erstreckt sich nicht um 360° um die Mittelachse, sondern nur um einen Winkelbereich von etwa 90°. Der Durchgang 10 ist dabei derart bemessen, dass wenn das Mutterelement 8 in der Grobeinstelllage G ist, das Aussengewinde 7 der Gewindestange 6 nicht mit dem Innengewindeabschnitt 18 im Eingriff ist, sondern beabstandet zu diesem liegt. Dies kann in den Figuren 2a und 9b gut erkannt werden. Die Gewindestange 6 liegt mit dem Aussengewinde 7 radial beabstandet zum Innengewindeabschnitt 18, sodass kein Eingriff zwischen dem Aussengewinde 7 der Gewindestange 6 und dem Innengewindeabschnitt 18 der Aufnahmeöffnung 5 bereitgestellt wird. Wird nun das Mutterelement 8 in die Feineinstelllage F bewegt, so wird die Gewindestange 8 radial zur Mittelachse M in den Innengewindeabschnitt 18 bewegt und das Aussengewinde 7 der Gewindestange 6 greift sowohl in das Innengewinde 9 des Mutterelementes 8 als auch in den Innengewindeabschnitt 18 der Aufnahmeöffnung 5 ein. In der Klemmlage K wird das Aussengewinde 7 der Gewindestange 6 durch das Mutterelement 8 radial in den Innengewindeabschnitt 18 gedrückt und dort verklemmt. Der Innengewindeabschnitt 18 hat den Vorteil, dass die Kraftübertragung im der Klemmlage verbessert werden kann.

In einer anderen nicht gezeigten Ausführungsform kann auf den Innengewindeabschnitt 18 verzichtet werden, wobei das Aussengewinde 7 der Gewindestange 6 ausschliesslich mit dem Innengewinde 9 des Mutterelementes im Eingriff ist und an der Innenseite 24 der Aufnahmeöffnung 5 anliegt.

Bei der Bewegung des Sicherungselementes 11 von der Ausgangslage A in die Sicherungslage S wird das Mutterelement 6 von der Feineinstelllage F in die Klemmlage entlang einer Querbewegung Q quer zur Mittelachse M bewegt. Hierdurch wird die Gewindestange 6 dann zwischen dem Innengewinde 9 und der Aufnahmeöffnung 5 entsprechend verklemmt. Für das Ausführen dieser Querbewegung Q ist zwischen dem Aussengewinde 12 des Aufnahmeabschnittes 4 und dem Innengewinde 9 des Mutterelementes 8 Spiel vorhanden, so dass diese Bewegung entsprechend ausgeführt werden kann.

Vorzugsweise erstreckt sich das Aussengewinde 12 des Aufnahmeabschnittes 4, wie in den Figuren gezeigt, höchstens in einem Winkel von 300° um die Mittelachse M herum. Das Innengewinde 9 des Mutterelementes 8 erstreckt sich bevorzugt in einem Winkel von höchstens 300° um die Mittelachse M herum. Der Durchgang 10 erstreckt sich dabei um den Restwinkel um die Mittelachse M herum. Der Restwinkel liegt dabei in einem Bereich von mindestens 60°. Die Winkel können je nach Dimensionierung variieren. Der Durchgang ist jeweils so bemessen, dass in der Grobeinstelllage ein freies Verschieben der Gewindestange ermöglicht wird. Das heisst, dass dann kein Eingriff zwischen dem Innengewinde des Mutterelements und dem Aussengewinde der Gewindestange vorliegt und die Gewindestange ungehindert verschiebbar ist.

Der Durchgang 10 erstreckt sich, wie in den Figuren dargestellt, vom Innengewinde 9 des Mutterelementes 8 radial in das Mutterelement 8 hinein. Dabei durchdringt der Durchgang 10 in Richtung der Mittelachse M gesehen die gesamte Breite des Mutterelementes 8.

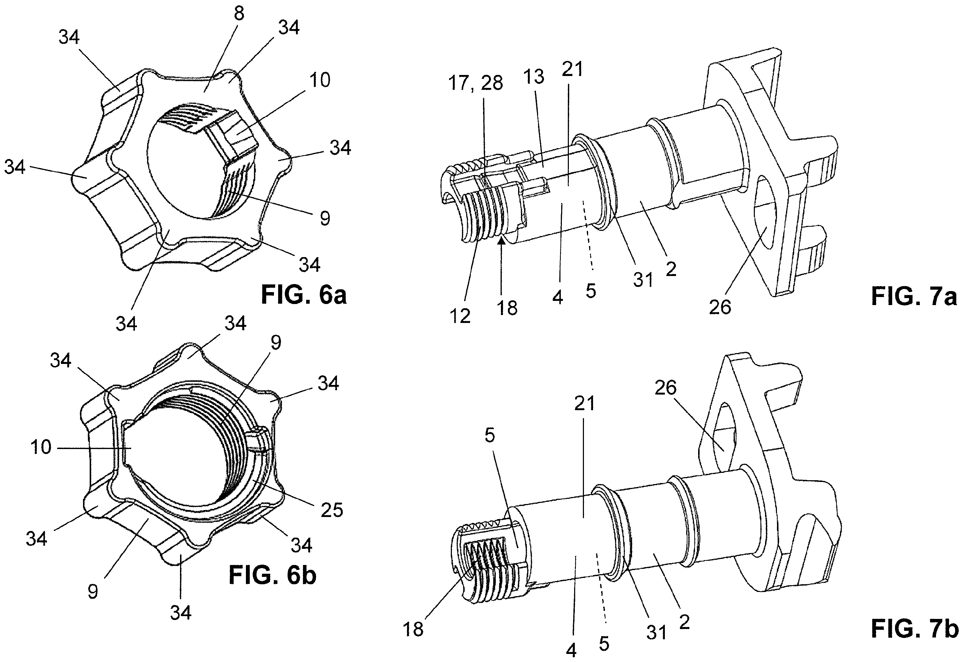

In der ersten Ausführungsform weist das Mutterelement 8 weiter eine Ausnehmung 25 auf. Die Ausnehmung 25 wird in den Figuren 2a bis 2d sowie in der Figur 6b dargestellt. In diese Ausnehmung 25 ragt das Sicherungselement 11 ein, wenn das Mutterelement 8 in der Grobeinstelllage G ist. Zudem ergeht der Vorteil, dass wenn das Sicherungselement 11 in die Ausnehmung 25 einragt, das Mutterelement 8 an einer Drehung gesichert ist und es zu keiner Verschiebung kommen kann, was gerade für die Auslieferung von Vorteil ist. Für die Bewegung in die Feineinstelllage F ist das Mutterelement 8 aus der Ausnehmung 25 zu bewegen. Die Ausnehmung 25 ist hier Teil einer weiteren Ausnehmung 37, welche sich um 180° um die Mittelachse M herumerstreckt. Das Sicherungselement 11 ragt mit dem Eingriffsabschnitt in der Ausgangslage jeweils in die weitere Ausnehmung 37 ein. Die Endbereiche 38 der Ausnehmung 37 stellen dabei einen Anschlag für das Mutterelement 8 bereit. Die Ausnehmung 37 geht in den Durchgang 10 über und der Endbereich 38 im Bereich des Durchgangs 10 wird durch dessen Seitenwand bereitgestellt.

In beiden Ausführungsformen ist das Sicherungselement 11 auf der Aussenseite des Aufnahmeabschnittes 4 in einer Längsführung 13 längsverschieblich und bezüglich der Mittelachse M drehfest gelagert. In der ersten Ausführungsform ist die Längsführung eine sich in Richtung der Mittelachse M erstreckende Nute auf der Aussenseite des Aufnahmeabschnittes. In der zweiten Ausführungsform ist die Längsführung eine sich in Richtung der Mittelachse M erstreckende Erhebung auf der Aussenseite des Aufnahmeabschnittes. Das Sicherungselement 11 weist eine zur Nute bzw. Erhebung komplementäre Eingriffsstruktur 35 auf. Die Eingriffsstruktur 35 kann durch das Sicherungselement 11 bereitgestellt werden.

Das Sicherungselement ist dabei von einer Ausgangslage A, wie in den Figuren 3a bis 3d und 10a und 10b gezeigt, in eine Sicherungslage S, wie in den Figuren 4a bis 4d und in den Figuren 11a bis 11b gezeigt, bewegbar. In der Sicherungslage S greift das Sicherungselement 11 derart in das Mutterelement 8 ein, dass dieses durch das Sicherungselement 11 radial gegen das Aussengewinde 7 der Gewindestange 6 gedrückt wird und bezüglich einer Drehbewegung um die Mittelachse M gesichert ist.

In der gezeigten Ausführungsform greift das Sicherungselement 11 in den Durchgang 10 ein. Hierfür weist das Sicherungselement 11 einen Eingriffsabschnitt 14 auf. Der Eingriffsabschnitt 14 ist dabei in den Durchgang 10 entsprechend einschiebbar. In beiden Ausführungsformen nimmt die Dicke des Eingriffsabschnittes 14 quer zur Mittelachse gesehen vom freien Ende 15 des Eingriffsabschnittes 14 entsprechend zu, derart, dass mit zunehmender Bewegung des Eingriffsabschnittes 14 in die Sicherungslage das Mutterelement 8 zunehmend radial gegen die Gewindestange 6 gedrückt wird. Es handelt sich also um eine keilartige Struktur des Eingriffsabschnittes 14, welche das Mutterelement 8 kontinuierlich bei der entsprechenden Bewegung des Eingriffsabschnittes 14 nach aussen drückt.

In der ersten Ausführungsform wird der Eingriffsabschnitt 14 des Sicherungselementes 11 durch zwei Federschenkel 16 gebildet. Die Federschenkel 16 sind dabei am freien Ende 15 des Eingriffsabschnittes 14 entsprechend zusammengeführt. Diese Federschenkel 16 sorgen für eine entsprechende Krafteinwirkung radial auf die Gewindestange 6. In der zweiten Ausführungsform ist der Eingriffsabschnitt als starres Element ausgebildet.

Das Sicherungselement 11 ist in der Sicherungslage S mit einer Rastverbindung 17 zwischen dem Sicherungselement 11 und dem Aufnahmeabschnitt 4 an einer Bewegung aus der Sicherungslage S in die Ausgangslage A gesichert. In der ersten Ausführungsform weist die Rastverbindung 17 eine Rastnase 27 am Eingriffsabschnitt 14 und eine Rastöffnung 28 am Aufnahmeabschnitt 4 auf. Die Rastnase 27 greift, wie in der Figur 4b gezeigt, in die Rastöffnung 28 entsprechend ein. In der zweiten Ausführungsform ist die Rastverbindung 17 durch eine Rastnase 29, welche am Sicherungselement 11 angeformt ist, und durch eine Rastfläche 30, die vom Aufnahmeabschnitt 4 absteht, bereitgestellt. Es wird auf die Figuren 11a und 11b verwiesen.

Weiter weist das Sicherungselement 11 einen Lagerabschnitt 19 mit einer Lagerfläche 20 auf. In der ersten Ausführungsform ist die Lagerfläche 20 kreiszylindrisch ausgebildet. Der Lagerabschnitt 19 weist die Form eines Ringes auf. Die Lagerfläche 20 ist dabei in flächigem Kontakt an einer Aussenseite am Aufnahmeabschnitt 4 liegenden Fläche 21. Die Fläche 21 ist in der ersten Ausführungsform im Wesentlichen zylindrisch ausgebildet. In der zweiten Ausführungsform ist die Lagerfläche 20 ebenfalls zylindrisch ausgebildet. Die Lagerfläche erstreckt sich aber nicht vollständig um die Mittelachse M herum. Der Aufnahmeabschnitt 4 weist ebenfalls eine Fläche 21 auf, die komplementär mit der Lagerfläche 20 ausgebildet ist. Weiter weisen beide Ausführungsformen Anschlagselemente 31 auf, welche die Bewegung des Sicherungselementes 11 zwischen der Ausgangslage und der Sicherungslage beziehungsweise zwischen der Sicherungslage S und der Ausgangslage A entsprechend begrenzen. Die Anschlagselemente 31 erstrecken sich von der Fläche 21 und der Lagerfläche 20 und können einen entsprechenden Anschlag bereitstellen.

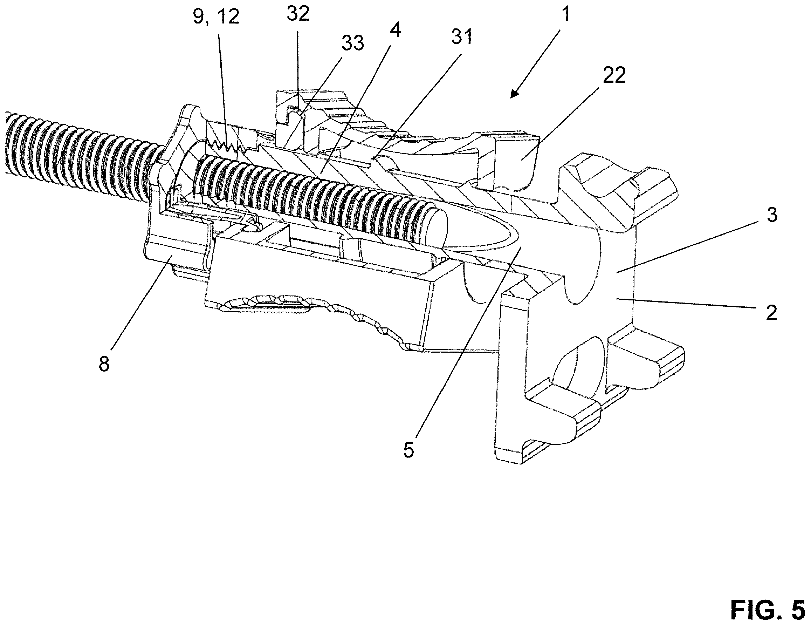

In der ersten Ausführungsform weist die Wandhalterung 1 weiter ein Supportelement 22 auf. Das Supportelement 22 ist am Sicherungselement 11 angeordnet und umfasst mindestens eine Supportfläche 23. In der ersten Ausführungsform sind das Supportelement 22 und das Sicherungselement 11 als zwei separate Elemente ausgebildet. Das Supportelement 22 weist eine Aufnahmenut 32 auf, in welcher das Sicherungselement 11 mit einer ringförmigen Aussenseite 33 eingreift. Über die Verbindung der Aufnahmenut 32 und ringförmige Aufnahmeseite 33 kann das Supportelement 22 zum Sicherungselement 11 entsprechend verschwenkt werden. Hierdurch kann die Supportfläche 23 nach den Bedürfnissen der Montage entsprechend ausgerichtet werden. In der Figur 5 wird das Supportelement 22 in einer verschwenkten Position gezeigt. Das Supportelement 23 kann weiter mit einer Stützfläche 36 am Aufnahmeabschnitt 4 abgestützt sein.

In der zweiten Ausführungsform ist das Sicherungselement 11 und das Supportelement 22 einstückig ausgebildet. Eine entsprechende Ausrichtung der Supportfläche 23 ist dabei nicht möglich.

Vorzugsweise wird die Drehung des Mutterelements 8 in beiden Ausführungsformen durch einen Anschlag begrenzt. Der Anschlag wird vorzugsweise durch das Sicherungselement 11 bereitgestellt.

**BEZUGSZEICHENLISTE**

| | | | |
|---|---|---|---|
| 1 | Wandhalterung | 25 | Ausnehmung |
| 2 | Ankerelement | 26 | Durchführöffnung |
| 3 | Befestigungsabschnitt | 27 | Rastnase |
| 4 | Aufnahmeabschnitt | 28 | Rastöffnung |
| 5 | Aufnahmeöffnung | 29 | Rastnase |
| 6 | Gewindestange | 30 | Rastfläche |
| 7 | Aussengewinde von | 31 | Anschlagselemente |
| | Gewindestange | 32 | Aufnahmenut |
| 8 | Mutterelement | 33 | ringförmige Aussenseite |
| 9 | Innengewinde | 34 | Antriebsstruktur |
| 10 | Durchgang | 35 | Eingriffsstruktur |
| 11 | Sicherungselement | 36 | Stützfläche |
| 12 | Aussengewinde vom | 37 | weitere Ausnehmung |
| | Aufnahmeabschnitt | 38 | Endbereich |
| 13 | Längsführung | A | Ausgangslage |
| 14 | Eingriffsabschnitt | S | Sicherungslage |
| 15 | freies Ende | | |
| 16 | Federschenkel | G | Grobeinstelllage |
| 17 | Rastverbindung | F | Feineinstelllage |
| 18 | Innengewindeabschnitt | K | Klemmlage |
| 19 | Lagerabschnitt | Q | Querbewegung |
| 20 | Lagerfläche | | |
| 21 | Fläche | M | Mittelachse |
| 22 | Supportelement | | |
| 23 | Supportfläche | | |
| 24 | Innenseite | | |

## Patentansprüche

1. Wandhalterung (1) umfassend
ein Ankerelement (2) mit einem Befestigungsabschnitt (3) zur Befestigung des Ankerelements (2) an einem Gebäude und mit einem sich dem Befestigungsabschnitt (3) anschliessenden sowie sich entlang einer Mittelachse (M) erstreckenden Aufnahmeabschnitt (4) mit einer sich entlang der Mittelachse (M) erstreckenden Aufnahmeöffnung (5),
eine in der Aufnahmeöffnung (5) bewegbar gelagerte Gewindestange (6) mit einem Aussengewinde (7),
ein Mutterelement (8) mit einem Innengewinde (9), das umfangsseitig durch einen gewindefreien Durchgang (10) unterbrochen ist, und
ein Sicherungselement (11) zur Sicherung des Mutterelements (8),
wobei der Aufnahmeabschnitt (4) ein Aussengewinde (12) aufweist, auf welchem das Mutterelement (8) mit dem Innengewinde (9) verschwenkbar gelagert ist,
wobei das Mutterelement (8) von einer Grobeinstelllage (G) über eine Feineinstelllage (F) in eine Klemmlage (K) bewegbar ist,
wobei in der Grobeinstelllage (G) das Mutterelement (8) derart positioniert ist, dass das Aussengewinde (7) der Gewindestange (6) im Durchgang (10) liegt, so dass die Gewindestange (6) in der Aufnahmeöffnung (5) in Richtung der Mittelachse (M) verschiebbar ist; und
wobei in der Feineinstelllage (F) das Mutterelement (8) derart positioniert ist, dass das Aussengewinde (7) der Gewindestange (6) im Eingriff mit dem Innengewinde (9) des Mutterelements (8) ist, derart, dass durch Drehen der Gewindestange (6) die Gewindestange (6) einen Vorschub in Richtung der Mittelachse (M) erfährt; und
wobei von der Feineinstelllage (F) das Mutterelement (8) durch das Sicherungselement (11) mit dem Innengewinde (9) radial zur Gewindestange (6) in die Klemmlage (K) bewegt wird, derart dass ein Drehen der Gewindestange (6) verunmöglicht wird.

2. Wandhalterung (1) nach Anspruch 1, **dadurch gekennzeichnet, dass** in der Klemmlage (K) die Gewindestange (6) gegen die Innenseite (24) der Aufnahmeöffnung (5) gedrückt wird, derart, dass die Gewindestange (6) zwischen der Innenseite (24) der Aufnahmeöffnung (5) und dem Innengewinde (9) des Mutterelements (8) geklemmt wird.

3. Wandhalterung (1) nach Anspruch 1 oder 2, **dadurch gekennzeichnet, dass** das Mutterelement (8) von der Feineinstelllage (F) in die Klemmlage (K) entlang einer Querbewegung (Q) quer zur Mittelachse (M) bewegt wird, wobei durch diese Querbewegung (Q) die Gewindestange (6) zwischen dem Innengewinde (9) und Aufnahmeöffnung (5) verklemmt wird.

4. Wandhalterung (1) nach einem der vorhergehenden Ansprüche, **dadurch gekennzeichnet, dass** der Durchgang (10) sich vom Innengewinde (9) des Mutterelements (8) her radial in das Mutterelement (8) hinein erstreckt.

5. Wandhalterung (1) nach einem der vorhergehenden Ansprüche, **dadurch gekennzeichnet, dass** das Sicherungselement (11) auf der Aussenseite des Aufnahmeabschnitts (4) in einer Längsführung (13) längsbeweglich und bezüglich der Mittelachse (M) drehfest gelagert ist und von einer Ausgangslage (A) in eine Sicherungslage (S) bewegbar ist, wobei in der Sicherungslage (S) das Sicherungselement (11) derart in das Mutterelement (8) eingreift, dass dieses radial gegen das Aussengewinde (7) der Gewindestange (6) gedrückt wird und bezüglich einer Drehbewegung um die Mittelachse (M) gesichert ist.

6. Wandhalterung (1) nach einem der vorhergehenden Ansprüche, **dadurch gekennzeichnet, dass** das Mutterelement (8) eine Ausnehmung (25) aufweist, in welche das Sicherungselement (11) einragt, wenn das Mutterelement (8) in der Grobeinstelllage (G) ist, wobei für die Bewegung in die Feineinstelllage (F) das Mutterelement (8) aus der Ausnehmung zu bewegen ist.

7. Wandhalterung (1) nach einem der vorhergehenden Ansprüche, **dadurch gekennzeichnet, dass** das Sicherungselement (11) einen Eingriffsabschnitt (14) aufweist, welcher in der Sicherungslage in den Durchgang (10) des Mutterelementes (8) eingreift.

8. Wandhalterung nach Anspruch 7, **dadurch gekennzeichnet, dass** die Dicke des Eingriffsabschnitts (14) quer zur Mittelachse (M) gesehen von seinem freien Ende (15) her gesehen zunimmt, derart, dass mit zunehmender Bewegung in die Sicherungslage, das Mutterelement (8) radial gegen die Gewindestange (6) gedrückt wird.

9. Wandhalterung (1) nach Anspruch 7 oder 8, **dadurch gekennzeichnet, dass** der Eingriffsabschnitt (14) durch zwei Federschenkel (16) gebildet ist, welche am freien Ende (15) des Eingriffsabschnitts (14) zusammengeführt sind; oder dass der Eingriffsabschnitt als starres Element ausgebildet ist.

10. Wandhalterung (1) nach einem der vorhergehenden Ansprüche, **dadurch gekennzeichnet, dass** das Sicherungselement (11) in der Sicherungslage (S) mit einer Rastverbindung (17) zwischen Sicherungselement (11) und Aufnahmeabschnitt (4) an einer Bewegung aus der Sicherungslage (S) in die Ausgangslage (A) gesichert ist.

11. Wandhalterung (1) nach einem der vorhergehenden Ansprüche, **dadurch gekennzeichnet, dass** die Aufnahmeöffnung (5) einen Innengewindeabschnitt (18) aufweist, wobei wenn das Mutterelement (8) in der Feineinstalllage (F) ist, der Innengewindeabschnitt (18) und das Innengewinde (9) des Mutterelements (8) gemeinsam ein Innengewinde für die Gewindestange (6) bereitstellen.

12. Wandhalterung (1) nach einem der vorhergehenden Ansprüche, **dadurch gekennzeichnet, dass** das Sicherungselement (11) einen Lagerabschnitt (19) mit einer Lagerfläche (20) aufweist, wobei das Sicherungselement (11) an einer aussenseitig am Aufnahmeabschnitt (4) liegenden Fläche (21) mit der Lagerfläche (20) anliegt.

13. Wandhalterung (1) nach einem der vorhergehenden Ansprüche, **dadurch gekennzeichnet, dass** am Sicherungselement (11) ein Supportelement (22) angeordnet ist, wobei das Supportelement (22) mindestens eine Supportfläche (23) aufweist.

14. Wandhalterung nach Anspruch 13, **dadurch gekennzeichnet, dass** das Sicherungselement (11) und das Supportelement (22) zwei separate Elemente sind, welche miteinander verbindbar sind, wobei das Supportelement (22) vorzugsweise zum Sicherungselement (11) verschwenkbar ist; oder dass das Sicherungselement (11) und das Supportelement (22) einstückig ausgebildet sind.

15. Verfahren zur Montage einer Wandhalterung (1) nach einem der vorhergehenden Ansprüche, **dadurch gekennzeichnet,**
**dass** das Mutterelement in die Grobeinstelllage (G) gebracht wird, derart, dass die Gewindestange (6) in der Aufnahmeöffnung (5) in Richtung der Mittelachse (M) verschiebbar ist;
**dass** nach erfolgter Grobeinstellung das Mutterelement (8) in die Feineinstelllage (F) gebracht wird, derart, dass durch Drehen der Gewindestange (6) die Gewindestange (6) einen Vorschub in Richtung der Mittelachse (M) erfährt;
**dass** nach erfolgter Feineinstellung, das Mutterelement (8) in die Klemmlage (K) gebracht wird, derart, dass ein Drehen der Gewindestange (6) verunmöglicht wird.

## Claims

1. Wall mount (1) comprising
an anchor element (2) having a fastening portion (3) for fastening the anchor element (2) to a building and having a receiving portion (4) that adjoins the fastening portion (3), extends along a central axis (M) and has a receiving opening (5) extending along the central axis (M),
a threaded rod (6) that is movably mounted in the receiving opening (5) and has an external thread (7),
a nut element (8) having an internal thread (9) that is circumferentially interrupted by a thread-free passage (10), and
a securing element (11) for securing the nut element (8),
wherein the receiving portion (4) has an external thread (12) on which the nut element (8) having the internal thread (9) is pivotably mounted,
wherein the nut element (8) is movable from a rough adjustment position (G) into a clamping position (K) via a fine adjustment position (F),
wherein, in the rough adjustment position (G), the nut element (8) is positioned such that the external thread (7) of the threaded rod (6) lies in the passage (10), such that the threaded rod (6) is displaceable in the direction of the central axis (M) in the receiving opening (5); and
wherein, in the fine adjustment position (F), the nut element (8) is positioned such that the external thread (7) of the threaded rod (6) is engaged with the internal thread (9) of the nut element (8), such that rotation of the threaded rod (6) causes the threaded rod (6) to advance in the direction of the central axis (M); and
wherein, from the fine adjustment position (F), the nut element (8) is moved radially with respect to the threaded rod (6) into the clamping position (K) by the securing element (11) having the internal thread (9), such that rotation of the threaded rod (6) is rendered impossible.

2. Wall mount (1) according to Claim 1, **characterized in that**, in the clamping position (K), the threaded rod (6) is pressed against the inner side (24) of the receiving opening (5), such that the threaded rod (6) is clamped between the inner side (24) of the receiving opening (5) and the internal thread (9) of the nut element (8).

3. Wall mount (1) according to Claim 1 or 2, **characterized in that** the nut element (8) is moved from the fine adjustment position (F) into the clamping position (K) along a transverse movement (Q) transverse to the central axis (M), wherein, as a result of this transverse movement (Q), the threaded rod (6) is clamped between the internal thread (9) and receiving opening (5).

4. Wall mount (1) according to one of the preceding claims, **characterized in that** the passage (10) extends radially into the nut element (8) from the internal thread (9) of the nut element (8).

5. Wall mount (1) according to one of the preceding claims, **characterized in that** the securing element (11) is mounted so as to be longitudinally movable in a longitudinal guide (13) on the outer side of the receiving portion (4) and so as to be rotationally fixed with respect to the central axis (M) and is movable from a starting position (A) into a securing position (S), wherein, in the securing position (S), the securing element (11) engages in the nut element (8) such that the latter is pressed radially against the external thread (7) of the threaded rod (6) and is secured with regard to a rotational movement about the central axis (M).

6. Wall mount (1) according to one of the preceding claims, **characterized in that** the nut element (8) has a recess (25) into which the securing element (11) projects when the nut element (8) is in the rough adjustment position (G), wherein, for the movement into the fine adjustment position (F), the nut element (8) needs to be moved out of the recess.

7. Wall mount (1) according to one of the preceding claims, **characterized in that** the securing element (11) has an engagement portion (14) which, in the securing position, engages in the passage (10) of the nut element (8).

8. Wall mount according to Claim 7, **characterized in that** the thickness of the engagement portion (14) as seen transversely to the central axis (M) increases as seen from its free end (15), such that, with increasing movement into the securing position, the nut element (8) is pressed radially against the threaded rod (6).

9. Wall mount (1) according to Claim 7 or 8, **characterized in that** the engagement portion (14) is formed by two spring legs (16) which are joined together at the free end (15) of the engagement portion (14); or **in that** the engagement portion is in the form of a rigid element.

10. Wall mount (1) according to one of the preceding claims, **characterized in that**, in the securing position (S), the securing element (11) is secured against moving out of the securing position (S) into the starting position (A) by a latching connection (17) between the securing element (11) and receiving portion (4).

11. Wall mount (1) according to one of the preceding claims, **characterized in that** the receiving opening (5) has an internal threaded portion (18), wherein, when the nut element (8) is in the fine adjustment position (F), the internal threaded portion (18) and the internal thread (9) of the nut element (8) jointly provide an internal thread for the threaded rod (6).

12. Wall mount (1) according to one of the preceding claims, **characterized in that** the securing element (11) has a bearing portion (19) with a bearing surface (20), wherein the securing element (11) bears on a surface (21) located on the exterior of the receiving portion (4) by way of the bearing surface (20).

13. Wall mount (1) according to one of the preceding claims, **characterized in that** a support element (22) is arranged on the securing element (11), wherein the support element (22) has at least one support surface (23).

14. Wall mount according to Claim 13, **characterized in that** the securing element (11) and the support element (22) are two separate elements that are able to be connected together, wherein the support element (22) is preferably pivotable with respect to the securing element (11); or **in that** the securing element (11) and the support element (22) are formed in one piece.

15. Method for fitting a wall mount (1) according to one of the preceding claims, **characterized**
**in that** the nut element is moved into the rough adjustment position (G) such that the threaded rod (6) is displaceable in the direction of the central axis (M) in the receiving opening (5);
**in that**, after rough adjustment has been carried out, the nut element (8) is moved into the fine adjustment position (F) such that rotation of the threaded rod (6) causes the threaded rod (6) to advance in the direction of the central axis (M);
**in that**, after fine adjustment has been carried out, the nut element (8) is moved into the clamping position (K) such that rotation of the threaded rod (6) is rendered impossible.

## Revendications

1. Support mural (1) comprenant
un élément d'ancrage (2) avec une section de fixation (3) pour la fixation de l'élément d'ancrage (2) à un bâtiment et avec une section de réception (4) se raccordant à la section de fixation (3) et s'étendant le long d'un axe central (M) avec une ouverture de réception (5) s'étendant le long de l'axe central (M),
une tige filetée (6) montée de manière mobile dans l'ouverture de réception (5), avec un filetage extérieur (7),
un élément écrou (8) avec un filetage intérieur (9) qui est interrompu sur la périphérie par un passage sans filetage (10), et
un élément de blocage (11) pour bloquer l'élément écrou (8),
la section de réception (4) présentant un filetage extérieur (12) sur lequel l'élément écrou (8) est monté de manière pivotante avec le filetage intérieur (9),
l'élément écrou (8) pouvant être déplacé d'une position de réglage grossier (G) à une position de serrage (K) par l'intermédiaire d'une position de réglage fin (F),
dans la position de réglage grossier (G), l'élément écrou (8) étant positionné de telle sorte que le filetage extérieur (7) de la tige filetée (6) se situe dans le passage (10), de telle sorte que la tige filetée (6) peut être coulissée dans l'ouverture de réception (5) en direction de l'axe central (M) ; et
dans la position de réglage fin (F), l'élément écrou (8) étant positionné de telle sorte que le filetage extérieur (7) de la tige filetée (6) est en engagement avec le filetage intérieur (9) de l'élément écrou (8), de telle sorte que par rotation de la tige filetée (6), la tige filetée (6) subit une avance en direction de l'axe central (M) ; et
à partir de la position de réglage fin (F), l'élément écrou (8) étant déplacé par l'élément de blocage (11) avec le filetage intérieur (9) radialement par rapport à la tige filetée (6) vers la position de serrage (K), de telle sorte qu'une rotation de la tige filetée (6) est rendue impossible.

2. Support mural (1) selon la revendication 1, **caractérisé en ce que**, dans la position de serrage (K), la tige filetée (6) est pressée contre le côté intérieur (24) de l'ouverture de réception (5), de telle sorte que la tige filetée (6) est serrée entre le côté intérieur (24) de l'ouverture de réception (5) et le filetage intérieur (9) de l'élément écrou (8).

3. Support mural (1) selon la revendication 1 ou 2, **caractérisé en ce que** l'élément écrou (8) est déplacé de la position de réglage fin (F) vers la position de serrage (K) le long d'un mouvement transversal (Q) transversalement à l'axe central (M), ce mouvement transversal (Q) serrant la tige filetée (6) entre le filetage intérieur (9) et l'ouverture de réception (5).

4. Support mural (1) selon l'une quelconque des revendications précédentes, **caractérisé en ce que** le passage (10) s'étend radialement dans l'élément écrou (8) à partir du filetage intérieur (9) de l'élément écrou (8).

5. Support mural (1) selon l'une quelconque des revendications précédentes, **caractérisé en ce que** l'élément de blocage (11) est monté sur le côté extérieur de la section de réception (4) de manière à pouvoir se déplacer longitudinalement dans un guide longitudinal (13) et de manière à être immobile en rotation par rapport à l'axe central (M), et peut être déplacé d'une position de départ (A) dans une position de blocage (S) ; dans la position de blocage (S), l'élément de blocage (11) s'engageant dans l'élément écrou (8) de telle sorte que celui-ci est serré radialement contre le filetage extérieur (7) de la tige filetée (6) et est bloqué par rapport à un mouvement de rotation autour de l'axe central (M).

6. Support mural (1) selon l'une quelconque des revendications précédentes, **caractérisé en ce que** l'élément écrou (8) présente un évidement (25) dans lequel l'élément de blocage (11) pénètre lorsque l'élément écrou (8) est dans la position de réglage grossier (G), l'élément écrou (8) devant être déplacé hors de l'évidement pour le mouvement vers la position de réglage fin (F).

7. Support mural (1) selon l'une quelconque des revendications précédentes, **caractérisé en ce que** l'élément de blocage (11) présente une section d'engagement (14) qui, dans la position de blocage, s'engage dans le passage (10) de l'élément écrou (8).

8. Support mural selon la revendication 7, **caractérisé en ce que** l'épaisseur de la section d'engagement (14) augmente transversalement à l'axe central (M), vue depuis son extrémité libre (15), de telle sorte qu'avec un déplacement croissant vers la position de blocage, l'élément écrou (8) est pressé radialement contre la tige filetée (6).

9. Support mural (1) selon la revendication 7 ou 8, **caractérisé en ce que** la section d'engagement (14) est formée par deux branches de ressort (16) qui sont réunies à l'extrémité libre (15) de la section d'engagement (14) ; ou **en ce que** la section d'engagement est réalisée sous forme d'élément rigide.

10. Support mural (1) selon l'une quelconque des revendications précédentes, **caractérisé en ce que** l'élément de blocage (11) est bloqué dans la position de blocage (S) par une liaison par encliquetage (17) entre l'élément de blocage (11) et la section de réception (4) pour empêcher un mouvement de la position de blocage (S) vers la position de départ (A).

11. Support mural (1) selon l'une quelconque des revendications précédentes, **caractérisé en ce que** l'ouverture de réception (5) présente une section filetée intérieure (18) ; lorsque l'élément écrou (8) est dans la position de réglage fin (F), la section filetée intérieure (18) et le filetage intérieur (9) de l'élément écrou (8) fournissant ensemble un filetage intérieur pour la tige filetée (6).

12. Support mural (1) selon l'une quelconque des revendications précédentes, **caractérisé en ce que** l'élément de blocage (11) présente une section de palier (19) avec une surface de palier (20), l'élément de blocage (11) s'appuyant sur une surface (21) située du côté extérieur de la section de réception (4) avec la surface de palier (20).

13. Support mural (1) selon l'une quelconque des revendications précédentes, **caractérisé en ce qu'**un élément de soutien (22) est agencé sur l'élément de blocage (11), l'élément de soutien (22) présentant au moins une surface de soutien (23).

14. Support mural selon la revendication 13, **caractérisé en ce que** l'élément de blocage (11) et l'élément de soutien (22) sont deux éléments séparés qui peuvent être reliés l'un à l'autre, l'élément de soutien (22) pouvant de préférence pivoter par rapport à l'élément de blocage (11) ; ou **en ce que** l'élément de blocage (11) et l'élément de soutien (22) sont réalisés en une seule pièce.

15. Procédé de montage d'un support mural (1) selon l'une quelconque des revendications précédentes, **caractérisé**
**en ce que** l'élément écrou est amené dans la position de réglage grossier (G) de telle sorte que la tige filetée (6) peut être coulissée dans l'ouverture de réception (5) en direction de l'axe central (M) ;
**en ce qu'**une fois le réglage grossier effectué, l'élément écrou (8) est amené dans la position de réglage fin (F), de telle sorte que, par rotation de la tige filetée (6), la tige filetée (6) subit une avance en direction de l'axe central (M) ;
**en ce qu'**une fois le réglage fin effectué, l'élément écrou (8) est amené dans la position de serrage (K), de telle sorte qu'une rotation de la tige filetée (6) est rendue impossible.
